# EUROPEAN PATENT APPLICATION

(11) **EP 4 671 559 A1**
(43) Date of publication of application: **31.12.2025**
(21) Application number: 24760005.9
(22) Date of filing: 24.01.2024
(51) Int. Cl.: F16D 13/74, F16D 13/52, F16D 43/10

(54) **CLUTCH DEVICE**

(30) Priority: 21.02.2023 JP 2023025453
(71) Applicant: Kabushiki Kaisha F.C.C., Hamamatsu-shi, Shizuoka 431-1394 (JP)
(72) Inventor: YOSHIMOTO, Katsu, Hamamatsu-shi, Shizuoka 431-1394 (JP); OZAWA, Yoshihiko, Hamamatsu-shi, Shizuoka 431-1394 (JP); CHEN, Han Hiong, Hamamatsu-shi, Shizuoka 431-1394 (JP)
(74) Representative: Grünecker Patent- und Rechtsanwälte PartG mbB
(86) International application number: PCT/JP2024/002005
(87) International publication number: WO 2024/176698

(57) **Abstract**

A clutch apparatus includes: a clutch center 40 to be rotationally driven together with an output shaft 15; and a pressure plate 70 provided so as to be movable toward or away from the clutch center 40 and rotatable relative to the clutch center 40. The clutch center 40 includes an output shaft holder 42 to which the output shaft 15 is connected. The output shaft holder 42 includes an insertion hole 45 through which the output shaft 15 is inserted. An end face 42D1 of the output shaft holder 42 facing in a first direction D1 is provided with oil grooves 42P which are in communication with the insertion hole 45, which extend in a radial direction of the output shaft 15 from the insertion hole 45 to a radially outer edge 42DO of the end face 42D1 facing in the first direction D1, and through which clutch oil that has flowed out of the output shaft 15 flows.

## Description

### Technical Field

The present invention relates to clutch apparatuses.

### Background Art

Straddled vehicles, such as motorcycles, each include a clutch apparatus that is able to transmit a rotational driving force of a power source, such as an engine, to a driving wheel and cut off the rotational driving force. Patent Literature 1, for example, discloses a clutch apparatus including: an input member (which will hereinafter be referred to as an "input shaft") connected to an engine or its associated component(s); an output member (which will hereinafter be referred to as an "output shaft") connected to a driving wheel or its associated component(s); a clutch member (which will hereinafter be referred to as a "clutch center") connected to the output shaft; and a pressure member (which will hereinafter be referred to as a "pressure plate") movable toward or away from the clutch center. The clutch center is secured to the output shaft in order to transmit a rotational driving force, which has been received from the input shaft, to the output shaft. The clutch center includes an output shaft holder to which the output shaft is connected. The output shaft holder is provided with an insertion hole through which the output shaft is inserted. Clutch oil flows inside the output shaft and flows out of the output shaft through its predetermined portion.

### Citation List

### Patent Literature

Patent Literature 1: JP 2022-030211 A

### Summary of Invention

### Technical Problem

Component(s) such as a washer and/or an auxiliary clutch plate may be disposed on an end face of the output shaft holder of the clutch center, which is located opposite to a portion of the output shaft holder on which the pressure plate is disposed. This often involves flattening the end face. The flattened end face, however, comes into intimate contact with the washer and/or other component(s), making it impossible for the clutch oil flowing inside the output shaft to be sufficiently supplied to component(s) located radially outward of the output shaft holder.

The present invention has been made in view of these points and its object is to provide clutch apparatuses each of which enables clutch oil flowing inside an output shaft to be supplied to a component located radially outward of an output shaft holder.

### Solution to Problem

A clutch apparatus according to the present invention is a clutch apparatus to transmit a rotational driving force of an input shaft to an output shaft or cut off the rotational driving force. The clutch apparatus includes: a clutch center housed in a clutch housing holding input-side rotary plates to be rotationally driven in response to rotational driving of the input shaft, the clutch center holding output-side rotary plates disposed alternately with the input-side rotary plates, the clutch center being rotationally driven together with the output shaft; and a pressure plate provided so as to be movable toward or away from the clutch center and rotatable relative to the clutch center, the pressure plate being able to push the input-side rotary plates and the output-side rotary plates. The clutch center includes an output shaft holder to which the output shaft is connected. The output shaft holder includes an insertion hole through which the output shaft is inserted. Assuming that a direction in which the pressure plate moves toward the clutch center is a first direction and a direction in which the pressure plate moves away from the clutch center is a second direction, an end face of the output shaft holder facing in the first direction is provided with an oil groove which is in communication with the insertion hole, which extends in a radial direction of the output shaft from the insertion hole to a radially outer edge of the end face facing in the first direction, and through which clutch oil that has flowed out of the output shaft flows.

In the clutch apparatus according to the present invention, the oil groove provided in the end face of the output shaft holder facing in the first direction is in communication with the insertion hole and extends in the radial direction of the output shaft from the insertion hole to the radially outer edge of the end face facing in the first direction. Consequently, if a washer and/or other component(s), for example, are/is disposed on the end face of the output shaft holder facing in the first direction, clutch oil that has flowed out of the output shaft through the oil groove would be suppliable to the outside (e.g., the input-side rotary plates and the output-side rotary plates) from the radially outer edge of the end face of the output shaft holder facing in the first direction.

### Advantageous Effects of Invention

The present invention is able to provide clutch apparatuses each of which enables clutch oil flowing inside an output shaft to be supplied to a component located radially outward of an output shaft holder.

### Brief Description of Drawings

[Fig. 1] Fig. 1 is a cross-sectional view of a clutch apparatus according to one embodiment.
[Fig. 2] Fig. 2 is an enlarged cross-sectional view of a portion of the clutch apparatus according to said one embodiment.
[Fig. 3] Fig. 3 is a perspective view of a first clutch center according to said one embodiment.
[Fig. 4] Fig. 4 is a perspective view of the first clutch center according to said one embodiment.
[Fig. 5] Fig. 5 is a plan view of the first clutch center according to said one embodiment.
[Fig. 6] Fig. 6 is a bottom view of the first clutch center according to said one embodiment.
[Fig. 7] Fig. 7 is a perspective view of a second clutch center according to said one embodiment.
[Fig. 8] Fig. 8 is a plan view of the second clutch center according to said one embodiment.
[Fig. 9] Fig. 9 is a perspective view of a pressure plate according to said one embodiment.
[Fig. 10] Fig. 10 is a plan view of the pressure plate according to said one embodiment.
[Fig. 11] Fig. 11 is a cross-sectional view of a centrifugal clutch mechanism according to said one embodiment.
[Fig. 12] Fig. 12 is a partially cut-away perspective view of the centrifugal clutch mechanism according to said one embodiment.
[Fig. 13] Fig. 13 is a perspective view of an auxiliary clutch plate according to said one embodiment.
[Fig. 14] Fig. 14 is a perspective view of the auxiliary clutch plate according to said one embodiment.
[Fig. 15A] Fig. 15A is a schematic diagram illustrating actions of a center-side assist cam surface and a pressure-side assist cam surface.
[Fig. 15B] Fig. 15B is a schematic diagram illustrating actions of a center-side slipper cam surface and a pressure-side slipper cam surface.

### Description of Embodiments

Embodiments of clutch apparatuses according to the present invention will be described below with reference to the drawings. The embodiments described herein are naturally not intended to limit the present invention in any way. Components and elements having the same functions will be identified by the same reference signs and will not be described or will be described briefly when deemed redundant.

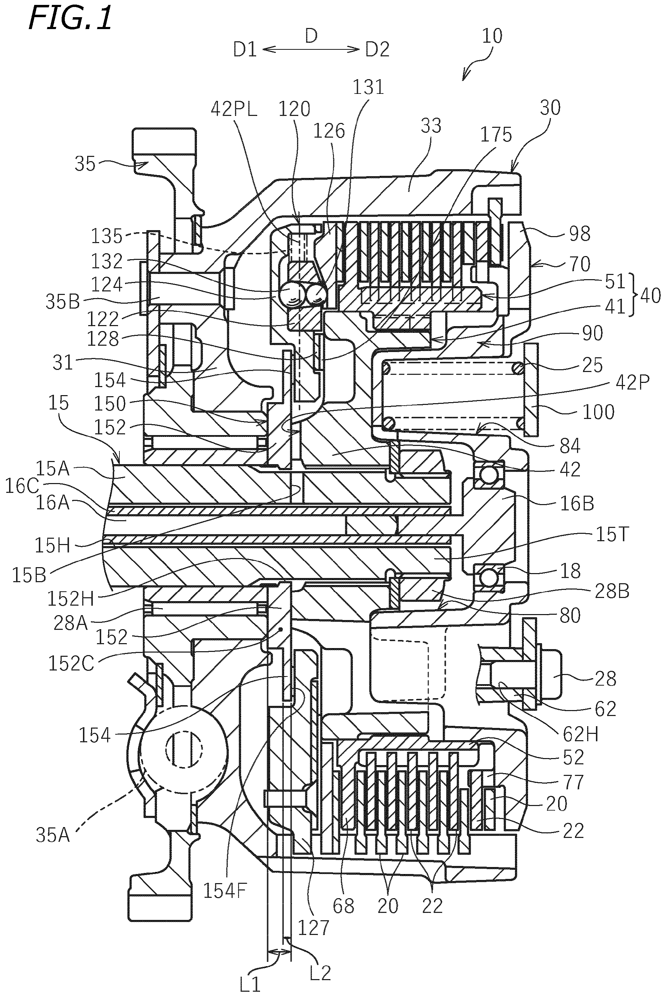

Fig. 1 is a cross-sectional view of a clutch apparatus 10 according to the present embodiment. The clutch apparatus 10 is installed, for example, on a straddled vehicle, such as a motorcycle. The clutch apparatus 10 is, for example, an apparatus to transmit a rotational driving force of an input shaft (e.g., a crankshaft) of an engine, which is a power source of a motorcycle, to an output shaft 15 or cut off the rotational driving force. The clutch apparatus 10 is an apparatus to transmit the rotational driving force of the input shaft to a driving wheel (e.g., a rear wheel) through the output shaft 15 or cut off the rotational driving force. The clutch apparatus 10 is disposed between the engine and a transmission.

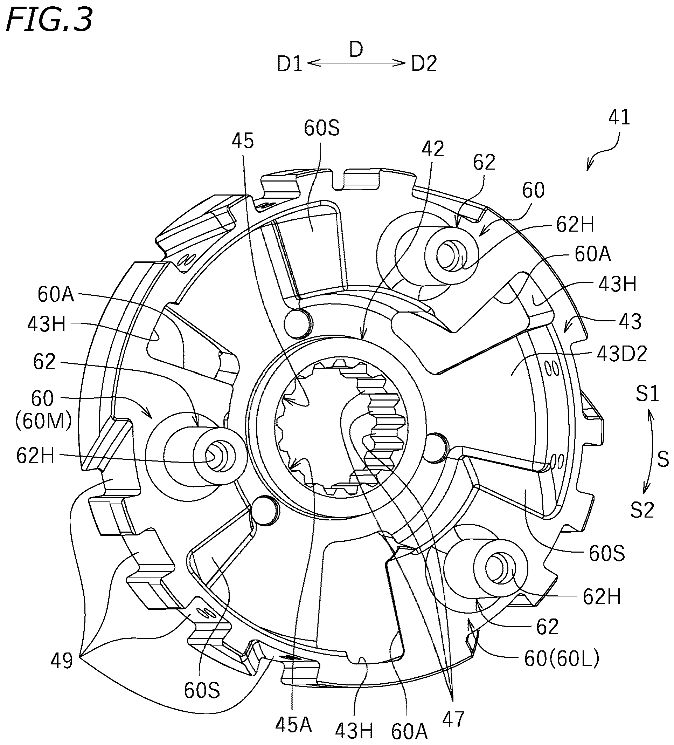

In the following description, a direction in which a pressure plate 70 of the clutch apparatus 10 moves toward and away from a clutch center 40 will be referred to as a "direction D", a direction in which the pressure plate 70 moves toward the clutch center 40 will be referred to as a "first direction D1", and a direction in which the pressure plate 70 moves away from the clutch center 40 will be referred to as a "second direction D2". A circumferential direction of the clutch center 40 and the pressure plate 70 will be referred to as a "circumferential direction S". A direction from a first one of pressure-side cam portions 90 to a second one of the pressure-side cam portions 90 (which corresponds to a direction from a first one of center-side cam portions 60 to a second one of the center-side cam portions 60) in the circumferential direction S will be referred to as a "first circumferential direction S1" (see Fig. 3). A direction from the second one of the pressure-side cam portions 90 to the first one of the pressure-side cam portions 90 (which corresponds to a direction from the second one of the center-side cam portions 60 to the first one of the center-side cam portions 60) in the circumferential direction S will be referred to as a "second circumferential direction S2" (see Fig. 3). In the present embodiment, an axial direction of the output shaft 15 corresponds to the direction D. The pressure plate 70 and the clutch center 40 rotate in the first circumferential direction S1 (i.e., a direction from a center-side assist cam surface 60A of each center-side cam portion 60 to a center-side slipper cam surface 60S thereof). These directions, however, are defined merely for the sake of convenience of description and thus do not limit in any way how the clutch apparatus 10 may be installed or do not limit in any way the present invention.

As illustrated in Fig. 1, the clutch apparatus 10 includes the output shaft 15, input-side rotary plates 20, output-side rotary plates 22, a clutch housing 30, the clutch center 40, the pressure plate 70, a stopper plate 100, a centrifugal clutch mechanism 120, and an auxiliary clutch plate 150.

As illustrated in Fig. 1, the output shaft 15 is a hollow shaft body. A first end portion of the output shaft 15 supports an input gear 35 and the clutch housing 30 (which will be described below) through a needle bearing 28A such that the input gear 35 and the clutch housing 30 are rotatable. The output shaft 15 supports the clutch center 40 through a nut 28B such that the clutch center 40 is fixed to the output shaft 15. In other words, the output shaft 15 rotates together with the clutch center 40. A second end portion of the output shaft 15 is connected to, for example, the transmission (not illustrated) of the motorcycle.

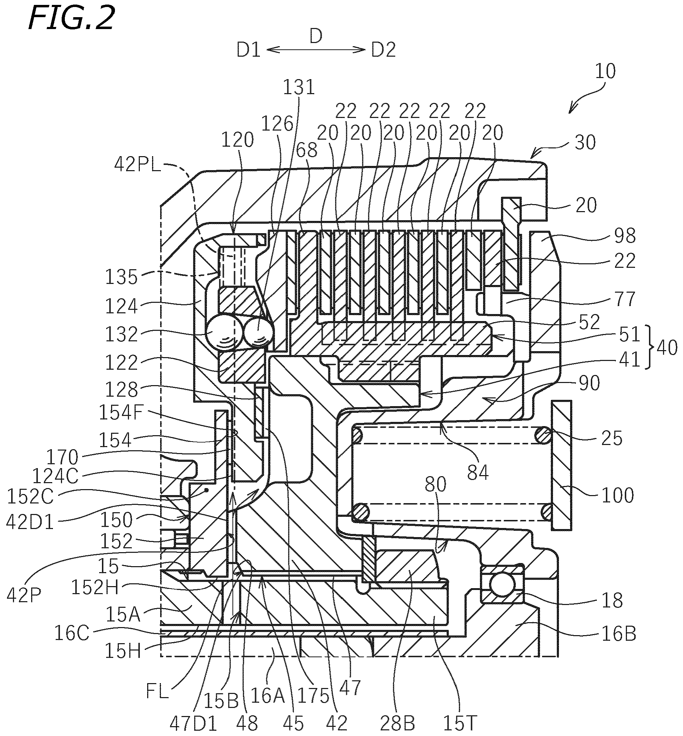

As illustrated in Fig. 1, the output shaft 15 includes: a body 15A extending in the direction D; and communication hole(s) 15B provided in the body 15A. The body 15A internally includes an oil flow passage 15H through which clutch oil flows. The oil flow passage 15H is defined between the body 15A and a sleeve 16C externally fitted to a push rod 16A (which will be described below). Clutch oil flows through the output shaft 15. Specifically, clutch oil flows through the oil flow passage 15H of the body 15A. The communication hole(s) 15B extend(s) in a radial direction of the output shaft 15 (which will hereinafter be referred to as a "radial direction"). The radial direction is a direction orthogonal to the direction D. The communication hole(s) 15B is/are in communication with the oil flow passage 15H. Some of the clutch oil flowing through the oil flow passage 15H flows into the communication hole(s) 15B. The number of communication hole(s) 15B provided in the body 15A is, for example, one or two. As illustrated in Fig. 2, at least portion(s) of the communication hole(s) 15B is/are located between an end face 42D1 of an after-mentioned output shaft holder 42, which faces in the first direction D1, and an end face 47D1 of after-mentioned fitting teeth 47, which faces in the first direction D1, in the axial direction of the output shaft 15 (i.e., the direction D).

As illustrated in Fig. 1, the push rod 16A and a portion of a push member 16B adjacent to the push rod 16A are provided in the oil flow passage 15H of the output shaft 15. The push rod 16A and the push member 16B are provided so as to be slidable within the sleeve 16C. A first end portion of the push rod 16A (i.e., a left end portion of the push rod 16A in Fig. 1) is connected to a clutch operation lever (not illustrated) of the motorcycle such that the push rod 16A slides within the sleeve 16C in response to an operation performed on the clutch operation lever and thus pushes the push member 16B in the second direction D2. A portion of the push member 16B is protruded out of the output shaft 15 (i.e., in the second direction D2 in this embodiment) and connected to a release bearing 18 provided on the pressure plate 70. The sleeve 16C and the push member 16B are each smaller than an inner diameter of the body 15A, with the result that clutch oil is allowed to flow through the oil flow passage 15H.

The clutch housing 30 is made of an aluminum alloy. The clutch housing 30 has a cylindrical shape with a bottom. As illustrated in Fig. 1, the clutch housing 30 includes a substantially circular bottom wall 31 and a side wall 33 extending in the second direction D2 from an edge of the bottom wall 31. The clutch housing 30 holds the input-side rotary plates 20.

As illustrated in Fig. 1, the bottom wall 31 of the clutch housing 30 is provided with the input gear 35. The input gear 35 is secured through a torque damper 35A to the bottom wall 31 with a rivet 35B. The input gear 35 is in mesh with a driving gear (not illustrated) that rotates in response to rotational driving of the input shaft of the engine. The input gear 35 is rotationally driven independently of the output shaft 15 and together with the clutch housing 30.

The input-side rotary plates 20 are rotationally driven in response to rotational driving of the input shaft. As illustrated in Fig. 1, the input-side rotary plates 20 are held by an inner peripheral surface of the side wall 33 of the clutch housing 30. The input-side rotary plates 20 are held by the clutch housing 30 through spline-fitting. The input-side rotary plates 20 are provided so as to be movable in an axial direction of the clutch housing 30 (i.e., the direction D). The input-side rotary plates 20 are provided so as to be rotatable together with the clutch housing 30.

The input-side rotary plates 20 are components to be pushed against the output-side rotary plates 22. The input-side rotary plates 20 are annular flat plates. The input-side rotary plates 20 are formed by casting an aluminum alloy. Friction materials (not illustrated) made of pieces of paper are affixed to front and back surfaces of the input-side rotary plates 20. Grooves for retaining clutch oil are formed between the friction materials to a depth ranging from a few or several µm to a few or several tens of µm.

As illustrated in Fig. 1, the clutch center 40 is housed in the clutch housing 30. The clutch center 40 is disposed concentrically with the clutch housing 30. The clutch center 40 holds the output-side rotary plates 22 disposed alternately with the input-side rotary plates 20 in the direction D. The clutch center 40 is rotationally driven together with the output shaft 15. The clutch center 40 includes a first clutch center 41 and a second clutch center 51. The first clutch center 41 and the second clutch center 51 are assembled to each other. The second clutch center 51 is located radially outward of the first clutch center 41. The second clutch center 51 is externally fitted to the first clutch center 41.

As illustrated in Fig. 3, the first clutch center 41 includes: the output shaft holder 42; an annular base wall 43 located radially outward of the output shaft holder 42; and the center-side cam portions 60.

As illustrated in Fig. 1, the output shaft 15 is connected to the output shaft holder 42. As illustrated in Fig. 3, the output shaft holder 42 has a cylindrical shape. The output shaft holder 42 is provided with an insertion hole 45 into which the output shaft 15 is inserted and spline-fitted. The insertion hole 45 is provided through the output shaft holder 42. An inner wall 45A of the output shaft holder 42, which defines the insertion hole 45, is provided with the fitting teeth 47 extending in the axial direction of the output shaft 15 (i.e., the direction D). The fitting teeth 47 are fitted to the output shaft 15.

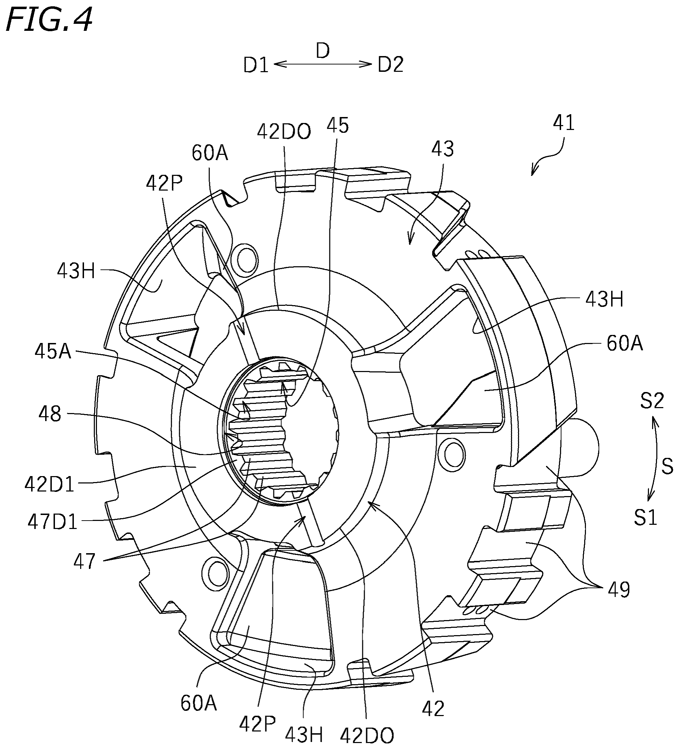

As illustrated in Fig. 4, the end face 42D1 of the output shaft holder 42 facing in the first direction D1 is provided with oil grooves 42P through which clutch oil flows. The oil grooves 42P extend in the radial direction of the output shaft 15. The oil grooves 42P are in communication with the insertion hole 45. The oil grooves 42P extend from the insertion hole 45 to a radially outer edge 42DO of the end face 42D1 facing in the first direction D1. The oil grooves 42P are recessed in the second direction D2 from the end face 42D1. In this embodiment, the number of oil grooves 42P provided in the end face 42D1 is two. The number of oil grooves 42P, however, is not limited to two. The two oil grooves 42P are provided opposite to each other. As illustrated in Fig. 2, the oil grooves 42P are located radially outward of the communication hole(s) 15B of the output shaft 15.

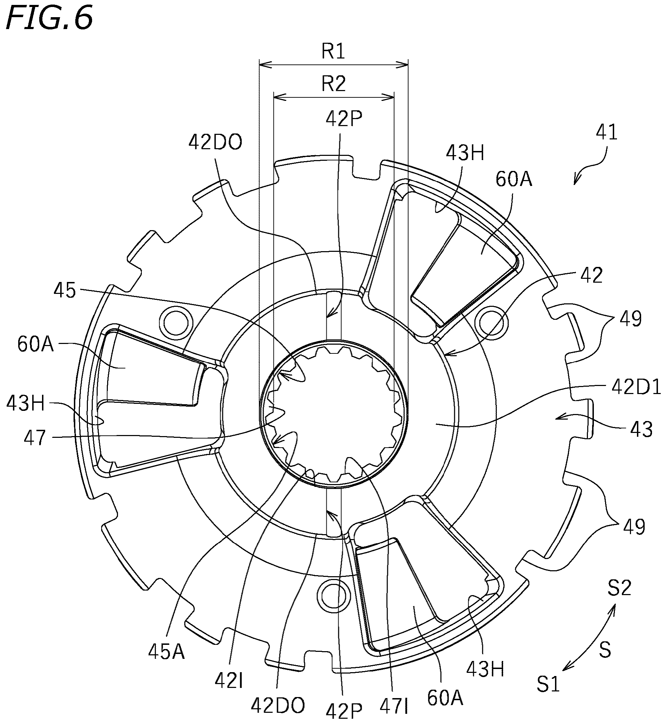

Aa illustrated in Fig. 4, at least a portion of the end face 42D1 of the output shaft holder 42 facing in the first direction D1 is located in the first direction D1 relative to the end face 47D1 of the fitting teeth 47 facing in the first direction D1. In this embodiment, an entirety of the end face 42D1 is located in the first direction D1 relative to the end face 47D1. A stepped portion 48 is provided between the end face 42D1 of the output shaft holder 42 facing in the first direction D1 and the end face 47D1 of the fitting teeth 47 facing in the first direction D1. In the present embodiment, the stepped portion 48 is provided across an entire circumference of the output shaft holder 42 (i.e., across an entire circumference of the insertion hole 45). The stepped portion 48 temporarily retains clutch oil. As illustrated in Fig. 6, when viewed in the axial direction of the output shaft 15, a diameter R1 of a portion of the insertion hole 45 defined by an inner edge 42I of the end face 42D1 of the output shaft holder 42 facing in the first direction D1 is larger than a diameter R2 of a portion of the insertion hole 45 defined by a radially inner edge 47I of the fitting teeth 47 (i.e., an imaginary circle passing through the edge 471).

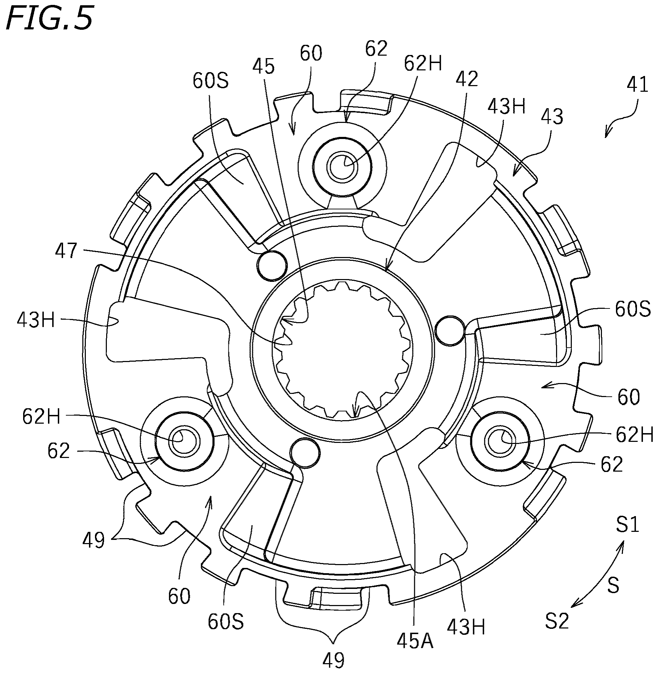

The center-side cam portions 60 are each in the shape of a block with cam surfaces that are inclined surfaces included in an assist & slipper (registered trademark) mechanism for producing an assist torque, which is a force to increase a pushing force (or pressing force) for the input-side rotary plates 20 and the output-side rotary plates 22, or a slipper torque, which is a force to reduce the pushing force (or pressing force) for the input-side rotary plates 20 and the output-side rotary plates 22 so as to make a transition to a half-clutch state. As illustrated in Fig. 3, the center-side cam portions 60 are provided so as to be protruded in the second direction D2 from a surface 43D2 of the base wall 43 located in the second direction D2. As illustrated in Fig. 5, the center-side cam portions 60 are disposed at equal intervals in the circumferential direction S of the first clutch center 41. In the present embodiment, the number of center-side cam portions 60 included in the first clutch center 41 is three. The number of center-side cam portions 60, however, is not limited to three.

As illustrated in Fig. 3, the center-side cam portions 60 are located radially outward of the output shaft holder 42. The center-side cam portions 60 include the center-side assist cam surfaces 60A (see also Fig. 6) and the center-side slipper cam surfaces 60S. The center-side assist cam surfaces 60A are configured to, upon being rotated relative to the pressure plate 70, produce a force in a direction in which the pressure plate 70 is moved toward the clutch center 40 in order to increase the pushing force (or pressing force) for the input-side rotary plates 20 and the output-side rotary plates 22. In the present embodiment, when the force is produced, the position of the pressure plate 70 relative to the clutch center 40 remains unchanged, making it unnecessary for the pressure plate 70 to physically move toward the clutch center 40. Alternatively, the pressure plate 70 may physically move relative to the clutch center 40. The center-side slipper cam surfaces 60S are configured to, upon being rotated relative to the pressure plate 70, move the pressure plate 70 away from the clutch center 40 in order to reduce the pushing force (or pressing force) for the input-side rotary plates 20 and the output-side rotary plates 22. The center-side assist cam surface 60A of a first center-side cam portion 60L, which is one of the center-side cam portions 60 adjacent to each other in the circumferential direction S, and the center-side slipper cam surface 60S of a second center-side cam portion 60M, which is another one of the center-side cam portions 60 adjacent to each other in the circumferential direction S, are disposed to face each other in the circumferential direction S.

As illustrated in Fig. 3, the first clutch center 41 includes bosses 62 (the number of which is three in the present embodiment). The bosses 62 are components securing the pressure plate 70. The bosses 62 are disposed at equal intervals in the circumferential direction S. The bosses 62 each have a cylindrical shape. The bosses 62 are located radially outward of the output shaft holder 42. The bosses 62 extend toward the pressure plate 70 (i.e., in the second direction D2). The bosses 62 are provided on the center-side cam portions 60. The bosses 62 are each provided between the associated center-side assist cam surface 60A and the associated center-side slipper cam surface 60S in the circumferential direction S. The bosses 62 are provided with threaded holes 62H into which bolts 28 (see Fig. 1) are inserted. The threaded holes 62H extend in an axial direction of the clutch center 40 (i.e., the direction D).

As illustrated in Fig. 5, the first clutch center 41 includes center-side cam holes 43H each passing through a portion of the base wall 43. The center-side cam holes 43H pass through the base wall 43 in the direction D. The center-side cam holes 43H are each located between adjacent ones of the center-side cam portions 60 in the circumferential direction S. As illustrated in Fig. 6, the center-side assist cam surfaces 60A and portions of the center-side cam holes 43H overlap with each other when viewed in the axial direction of the clutch center 40.

As illustrated in Fig. 3, the first clutch center 41 includes engaging grooves 49. The engaging grooves 49 are provided in an outer peripheral surface of the base wall 43. The engaging grooves 49 are recessed radially inward from the outer peripheral surface of the base wall 43.

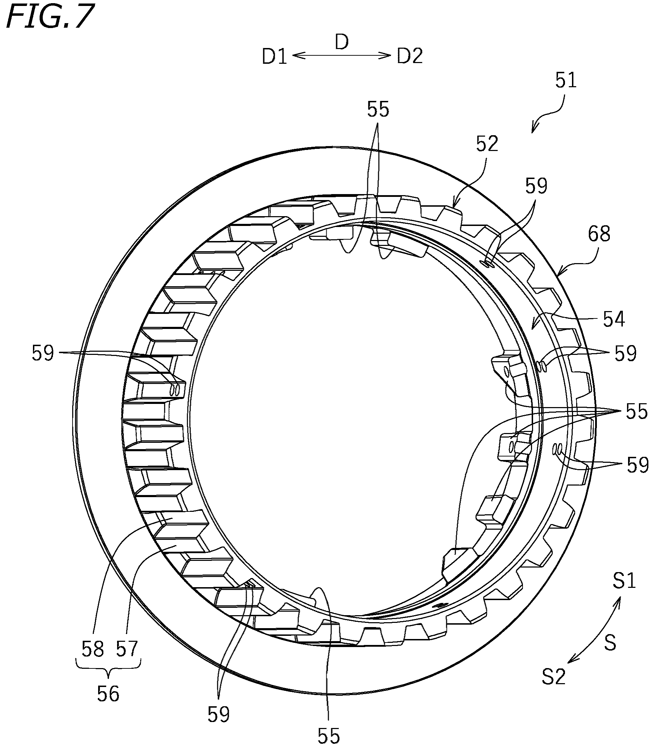

As illustrated in Fig. 7, the second clutch center 51 includes: an annular outer peripheral wall 52; a flange 68 extending radially outward from the outer peripheral wall 52; and a center-side fitting portion 54. The second clutch center 51 holds the output-side rotary plates 22 disposed alternately with the input-side rotary plates 20 in the direction D.

As illustrated in Fig. 7, an outer peripheral surface of the outer peripheral wall 52 is provided with a spline-fitting portion 56. The spline-fitting portion 56 includes: center-side fitting teeth 57 extending in an axial direction of the second clutch center 51 (i.e., the direction D) along the outer peripheral surface of the outer peripheral wall 52; spline grooves 58 provided between adjacent ones of the center-side fitting teeth 57 and extending in the axial direction of the second clutch center 51 (i.e., the direction D); and oil discharge holes 59. The center-side fitting teeth 57 hold the output-side rotary plates 22. The center-side fitting teeth 57 are arranged in the circumferential direction S. The center-side fitting teeth 57 are provided at equal intervals in the circumferential direction S. The center-side fitting teeth 57 are similar in shape. The center-side fitting teeth 57 protrude radially outward from the outer peripheral surface of the outer peripheral wall 52. The oil discharge holes 59 are each provided radially through the outer peripheral wall 52. The oil discharge holes 59 are each provided between adjacent ones of the center-side fitting teeth 57. In other words, the oil discharge holes 59 are provided in the spline grooves 58. The oil discharge holes 59 are provided in the center-side fitting portion 54. The oil discharge holes 59 allow communication between the inside and outside of the second clutch center 51. The oil discharge holes 59 are holes through which clutch oil or other fluid that has flowed out of the output shaft 15 into the clutch center 40 is to be discharged out of the clutch center 40. Clutch oil that has been discharged through the oil discharge holes 59 is supplied to the input-side rotary plates 20 and the output-side rotary plates 22 located radially outward of the oil discharge holes 59.

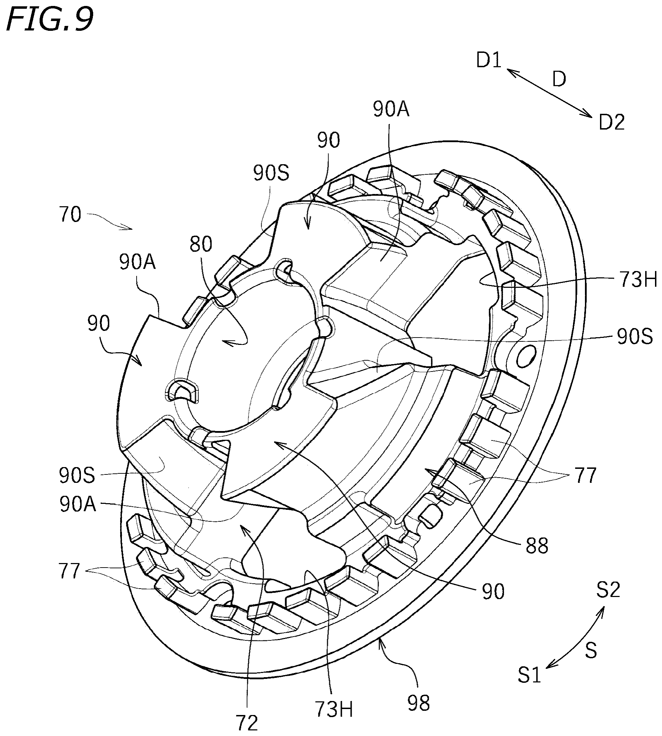

The output-side rotary plates 22 are held by the spline-fitting portion 56 of the second clutch center 51 and the pressure plate 70. Portions of the output-side rotary plates 22 are held by the center-side fitting teeth 57 and the spline grooves 58 of the second clutch center 51 through spline-fitting. The other portions of the output-side rotary plates 22 are held by after-mentioned pressure-side fitting teeth 77 (see Fig. 9) of the pressure plate 70. The output-side rotary plates 22 are provided so as to be movable in the axial direction of the clutch center 40 (i.e., the direction D). The output-side rotary plates 22 are provided so as to be rotatable together with the clutch center 40.

The output-side rotary plates 22 are components to be pushed against the input-side rotary plates 20. The output-side rotary plates 22 are annular flat plates. The output-side rotary plates 22 are formed by casting an aluminum alloy. The friction materials provided on the input-side rotary plates 20 may be provided on the output-side rotary plates 22 instead of being provided on the input-side rotary plates 20, or may be provided on both of the input-side rotary plates 20 and the output-side rotary plates 22.

As illustrated in Fig. 7, the center-side fitting portion 54 is provided on an inner peripheral surface of the outer peripheral wall 52. The center-side fitting portion 54 is configured to be externally fitted to an after-mentioned pressure-side fitting portion 88 (see Fig. 9) so as to be slidable thereon. The center-side fitting portion 54 has an inner diameter falling within a fitting tolerance that allows clutch oil flowing out of an extremity 15T (see Fig. 1) of the output shaft 15 to flow between the center-side fitting portion 54 and the pressure-side fitting portion 88. In other words, the center-side fitting portion 54 and the pressure-side fitting portion 88 have a gap therebetween.

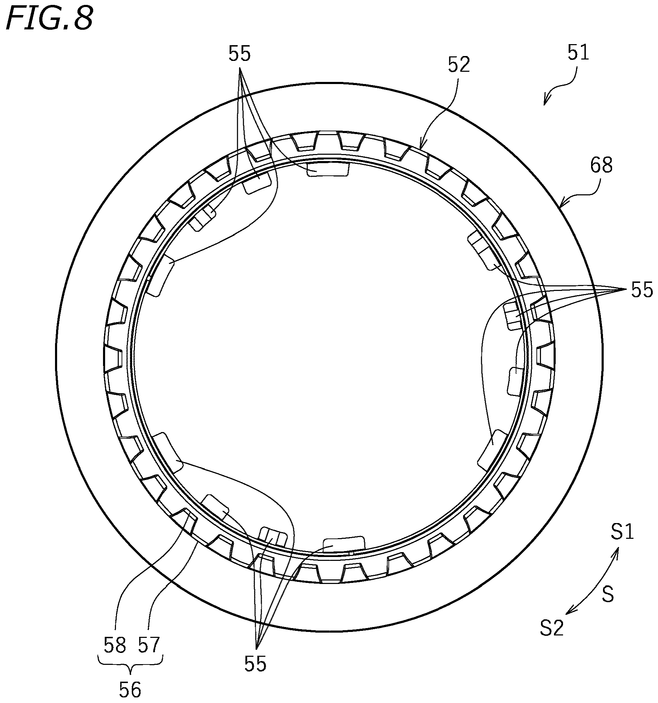

As illustrated in Figs. 7 and 8, the second clutch center 51 includes engaging protrusions 55. The engaging protrusions 55 come into engagement with the engaging grooves 49 (see Fig. 3) of the first clutch center 41. The engaging protrusions 55 are provided on the inner peripheral surface of the outer peripheral wall 52. The engaging protrusions 55 protrude radially inward from the inner peripheral surface of the outer peripheral wall 52. The engaging protrusions 55 are located in the first direction D1 relative to the oil discharge holes 59.

As illustrated in Fig. 1, the pressure plate 70 is provided so as to be movable toward or away from the clutch center 40 and rotatable relative to the clutch center 40. The pressure plate 70 is configured to be able to push the input-side rotary plates 20 and the output-side rotary plates 22. The pressure plate 70 is disposed concentrically with the clutch center 40 and the clutch housing 30. As illustrated in Fig. 9, the pressure plate 70 includes a body 72 and a flange 98 connected to an outer peripheral edge of the body 72, which is located in the second direction D2, and extending radially outward. The body 72 protrudes in the first direction D1 relative to the flange 98. The flange 98 is located radially outward of a tubular portion 80 (which will be described below). The pressure plate 70 holds the output-side rotary plates 22 disposed alternately with the input-side rotary plates 20. The flange 98 is configured to be able to push the input-side rotary plates 20 and the output-side rotary plates 22.

As illustrated in Fig. 9, the body 72 includes the tubular portion 80, the pressure-side cam portions 90, the pressure-side fitting portion 88, and spring housing portions 84 (see Fig. 1).

As illustrated in Fig. 9, the tubular portion 80 has a cylindrical shape. The tubular portion 80 is integral with the pressure-side cam portions 90. The tubular portion 80 houses the extremity 15T (see Fig. 1) of the output shaft 15. The release bearing 18 (see Fig. 1) is housed in the tubular portion 80. The tubular portion 80 is a region to receive a pushing force from the push member 16B (see Fig. 1) through the release bearing 18. The tubular portion 80 is a region to receive clutch oil that has flowed out of the extremity 15T of the output shaft 15.

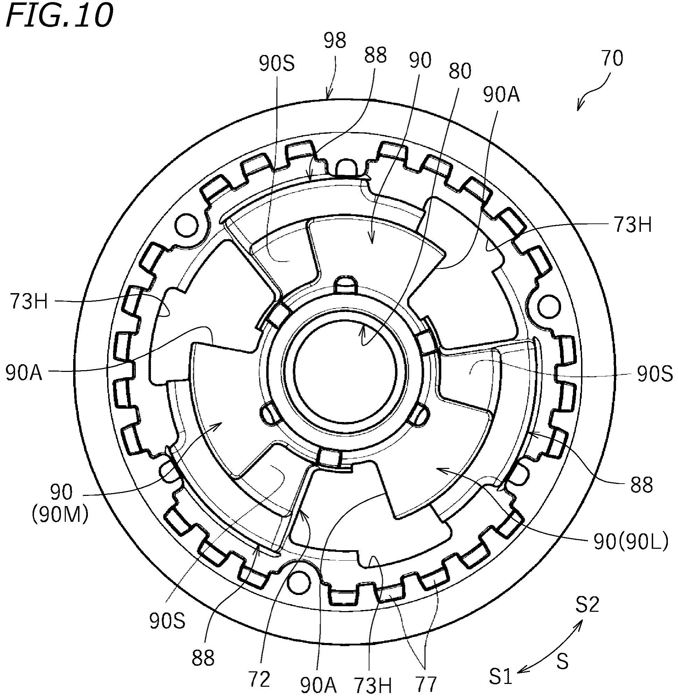

The pressure-side cam portions 90 are each in the shape of a block with cam surfaces that are inclined surfaces included in an assist & slipper (registered trademark) mechanism, which slides relative to the center-side cam portions 60 so as to produce an assist torque or a slipper torque. As illustrated in Fig. 9, the pressure-side cam portions 90 are provided so as to be protruded in the first direction D1 relative to the flange 98. As illustrated in Fig. 10, the pressure-side cam portions 90 are disposed at equal intervals in the circumferential direction S of the pressure plate 70. In the present embodiment, the number of pressure-side cam portions 90 included in the pressure plate 70 is three. The number of pressure-side cam portions 90, however, is not limited to three.

As illustrated in Fig. 10, the pressure-side cam portions 90 are located radially outward of the tubular portion 80. The pressure-side cam portions 90 include the pressure-side assist cam surfaces 90A (see also Fig. 9) and the pressure-side slipper cam surfaces 90S. The pressure-side assist cam surfaces 90A are configured to be able to come into contact with the center-side assist cam surfaces 60A. The pressure-side assist cam surfaces 90A are configured to, upon being rotated relative to the clutch center 40, produce a force in a direction in which the pressure plate 70 is moved toward the clutch center 40 in order to increase the pushing force (or pressing force) for the input-side rotary plates 20 and the output-side rotary plates 22. The pressure-side slipper cam surfaces 90S are configured to be able to come into contact with the center-side slipper cam surfaces 60S. The pressure-side slipper cam surfaces 90S are configured to, upon being rotated relative to the clutch center 40, move the pressure plate 70 away from the clutch center 40 in order to reduce the pushing force (or pressing force) for the input-side rotary plates 20 and the output-side rotary plates 22. The pressure-side assist cam surface 90A of a first pressure-side cam portion 90L, which is one of the pressure-side cam portions 90 adjacent to each other in the circumferential direction S, and the pressure-side slipper cam surface 90S of a second pressure-side cam portion 90M, which is another one of the pressure-side cam portions 90 adjacent to each other in the circumferential direction S, are disposed to face each other in the circumferential direction S.

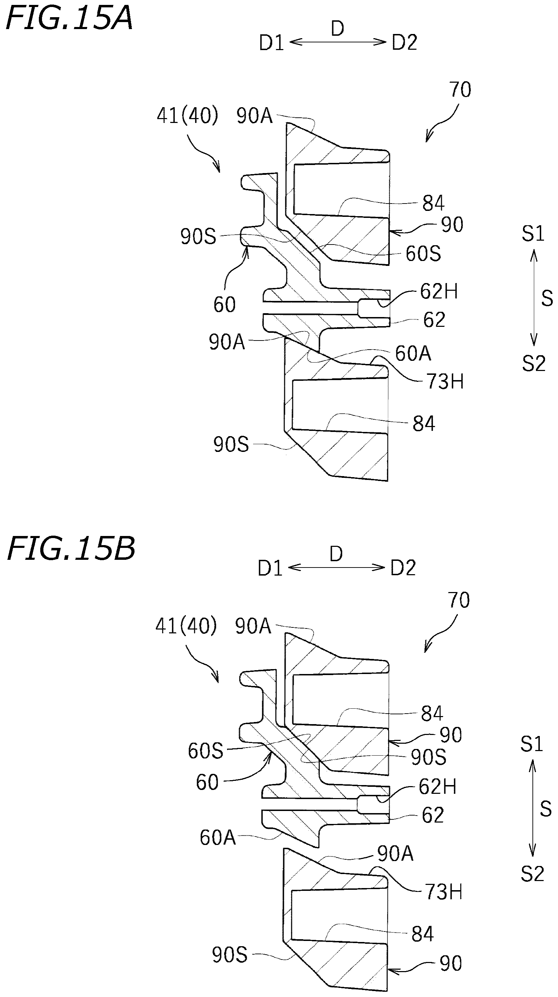

Actions of the center-side cam portions 60 and the pressure-side cam portions 90 will be described below. When the engine is increased in rotational speed such that a rotational driving force input to the input gear 35 and the clutch housing 30 is transmittable to the output shaft 15 through the clutch center 40, a rotational force is applied to the pressure plate 70 in the first circumferential direction S1 as illustrated in Fig. 15A. Thus, actions of the center-side assist cam surfaces 60A and the pressure-side assist cam surfaces 90A apply a force to the pressure plate 70 in the first direction D1. This increases the pressing force for the input-side rotary plates 20 and the output-side rotary plates 22.

When the output shaft 15 is higher in rotational speed than the input gear 35 and the clutch housing 30 such that a back torque is produced, a rotational force is applied to the clutch center 40 in the first circumferential direction S1 as illustrated in Fig. 15B. Thus, actions of the center-side slipper cam surfaces 60S and the pressure-side slipper cam surfaces 90S move the pressure plate 70 in the second direction D2 so as to release the pressing force for the input-side rotary plates 20 and the output-side rotary plates 22. This makes it possible to prevent the engine and/or the transmission from encountering a malfunction caused by the back torque.

As illustrated in Fig. 10, the pressure-side fitting portion 88 is located radially outward of the pressure-side cam portions 90. The pressure-side fitting portion 88 is located in the second direction D2 relative to the pressure-side cam portions 90. The pressure-side fitting portion 88 is configured to be internally fitted to the center-side fitting portion 54 (see Fig. 7) so as to be slidable thereon.

As illustrated in Figs. 9 and 10, the pressure plate 70 includes pressure-side cam holes 73H passing through portions of the body 72 and the flange 98. The pressure-side cam holes 73H are located radially outward of the tubular portion 80. The pressure-side cam holes 73H each extend radially outward of the pressure-side fitting portion 88 from a position laterally of the tubular portion 80. The pressure-side cam holes 73H are provided between the pressure-side assist cam surfaces 90A and the pressure-side slipper cam surfaces 90S of the pressure-side cam portions 90 adjacent to each other. As illustrated in Fig. 10, the pressure-side assist cam surfaces 90A and portions of the pressure-side cam holes 73H overlap with each other when viewed in an axial direction of the pressure plate 70. The bosses 62 (see Fig. 3) of the first clutch center 41 are inserted into the pressure-side cam holes 73H.

As illustrated in Fig. 9, the pressure plate 70 includes the pressure-side fitting teeth 77 disposed on the flange 98. The pressure-side fitting teeth 77 hold the output-side rotary plates 22. The pressure-side fitting teeth 77 protrude in the first direction D1 from the flange 98. The pressure-side fitting teeth 77 are located radially outward of the tubular portion 80. The pressure-side fitting teeth 77 are located radially outward of the pressure-side cam portions 90. The pressure-side fitting teeth 77 are located radially outward of the pressure-side fitting portion 88. The pressure-side fitting teeth 77 are arranged in the circumferential direction S. The pressure-side fitting teeth 77 are disposed at equal intervals in the circumferential direction S. In the present embodiment, not all of the pressure-side fitting teeth 77 are disposed at equal intervals, but some of the pressure-side fitting teeth 77 are disposed at larger intervals than the other pressure-side fitting teeth 77 adjacent to each other and disposed at equal intervals.

As illustrated in Fig. 1, the spring housing portions 84 are provided in the pressure-side cam portions 90. The spring housing portions 84 are recessed in the first direction D1 from the second direction D2 (see also Fig. 15A). The spring housing portions 84 each have a circular shape. The spring housing portions 84 house pressure springs 25.

As illustrated in Fig. 1, the pressure springs 25 are housed in the spring housing portions 84. The pressure springs 25 urge the pressure plate 70 toward the clutch center 40 (i.e., in the first direction D1). The pressure springs 25 are, for example, coil springs provided by spirally winding spring steel.

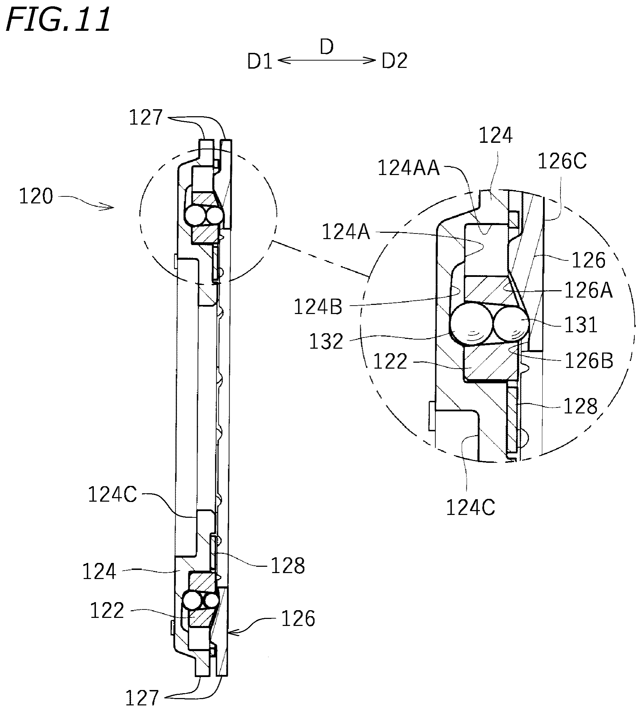

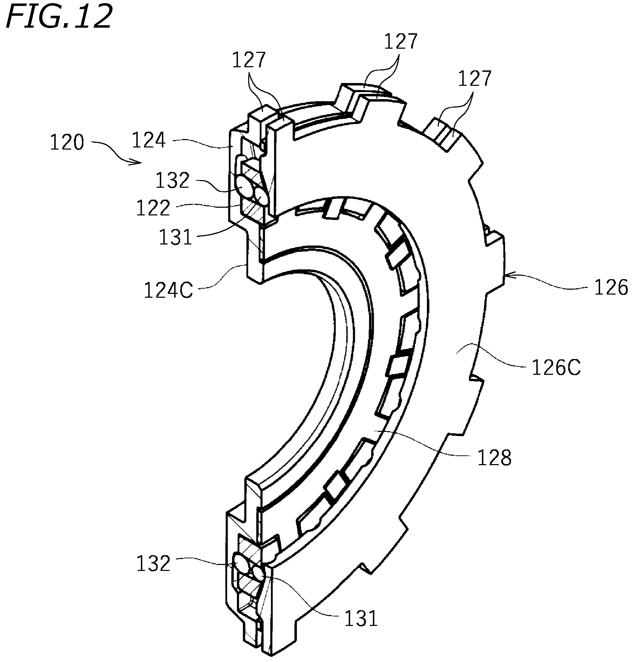

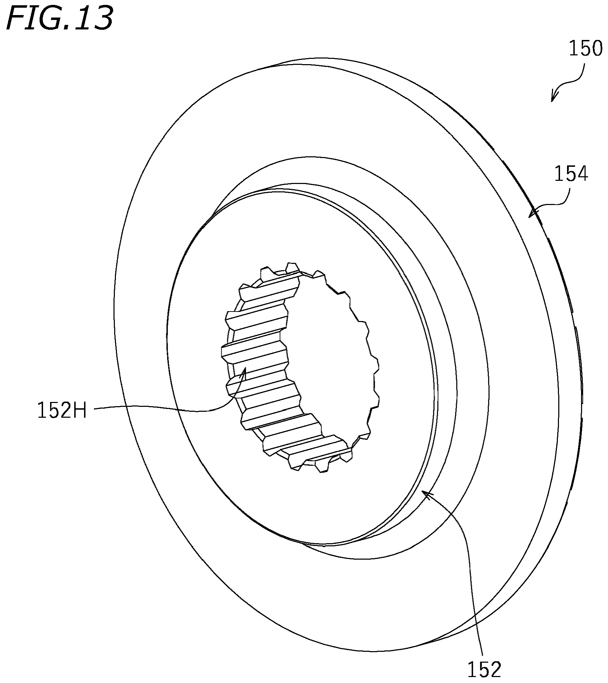

As illustrated in Fig. 1, the centrifugal clutch mechanism 120 is provided in the clutch housing 30. The centrifugal clutch mechanism 120 is provided in the first direction D1 relative to the clutch center 40. The centrifugal clutch mechanism 120 is located radially outward of the oil grooves 42P. The centrifugal clutch mechanism 120 is located on an extension line 42PL of each oil groove 42P (see also Fig. 2). The centrifugal clutch mechanism 120 is held by the clutch housing 30. The centrifugal clutch mechanism 120 is provided so as to be rotatable together with the clutch housing 30. As illustrated in Figs. 11 and 12, the centrifugal clutch mechanism 120 includes weight members 122, a holding member 124, a pressing member 126, a supporting member 128, first spherical members 131, second spherical members 132, and urging members 135 (see Fig. 1). When the weight members 122 are each located at a radially outer position, the centrifugal clutch mechanism 120 presses the input-side rotary plates 20 and the output-side rotary plates 22 against each other such that the rotational driving force of the input shaft is transmittable to the output shaft 15. When the weight members 122 are each located at a radially inner position, the centrifugal clutch mechanism 120 releases the pressing force for the input-side rotary plates 20 and the output-side rotary plates 22 so as to be able to cut off transmission of the rotational driving force of the input shaft to the output shaft 15. The centrifugal clutch mechanism 120 is configured to be able to push an after-mentioned disk portion 154 (see Fig. 13) of the auxiliary clutch plate 150 (see Fig. 13).

The weight members 122 are each configured to be movable from the radially inner position to the radially outer position with centrifugal force produced by rotation of the clutch housing 30. As illustrated in Fig. 11, the weight members 122 are housed in housing portions 124A (which will be described below) of the holding member 124. The weight members 122 are each held at the radially inner position, with no centrifugal force being applied thereto. Upon application of centrifugal force to the weight members 122, each weight member 122 moves radially outward against an urging force of the associated urging member 135 (see Fig. 1) and then reaches the radially outer position.

As illustrated in Fig. 11, the holding member 124 holds the weight members 122 such that the weight members 122 are each movable between the radially inner position and the radially outer position. The holding member 124 has an annular shape. The holding member 124 includes: the circumferentially arranged housing portions 124A; inclined grooves 124B defined in the housing portions 124A; and a pushing surface 124C. The housing portions 124A house the weight members 122. The housing portions 124A each have a recessed shape conforming to the shape of the associated weight member 122 and its moving range. The housing portions 124A are configured such that an end of each urging member 135 (see Fig. 1) is allowed to abut against an outer peripheral wall surface 124AA of the associated housing portion 124A.

As illustrated in Figs. 11 and 12, the pressing member 126 is configured to be able to press the input-side rotary plates 20 and the output-side rotary plates 22 against each other by moving in the second direction D2 upon movement of each weight member 122 from the radially inner position to the radially outer position. The pressing member 126 has an annular shape. The pressing member 126 includes: circumferentially arranged inclined grooves 126A; grooves 126B each continuous with an associated one of the inclined grooves 126A; and a pushing surface 126C. The inclined grooves 126A are each defined at a position facing an associated one of the weight members 122. The inclined grooves 126A are each inclined in the first direction D1 from its radially inner end to its radially outer end. With the clutch housing 30 brought to a halt, the weight members 122 are each held at the radially inner position with the urging force of the associated urging member 135 (see Fig. 1). Upon application of centrifugal force to the weight members 122 caused by rotation of the clutch housing 30, the weight members 122 move along the inclined grooves 126A, with the result that the pressing member 126 moves in a direction away from the holding member 124 (i.e., the second direction D2). Accordingly, the pushing surface 126C of the pressing member 126 pushes the flange 68 (see Fig. 1) of the second clutch center 51 in the second direction D2. The holding member 124 and the pressing member 126 each include circumferentially arranged protrusions 127. Similarly to the input-side rotary plates 20, the holding member 124 and the pressing member 126 are held by the inner peripheral surface of the side wall 33 of the clutch housing 30 through the protrusions 127. The holding member 124 and the pressing member 126 are fitted to and thus held by the clutch housing 30. The holding member 124 and the pressing member 126 are provided so as to be movable in the axial direction of the clutch housing 30 (i.e., the direction D). The holding member 124 and the pressing member 126 are provided so as to be rotatable together with the clutch housing 30.

As illustrated in Figs. 11 and 12, the supporting member 128 is attached to the holding member 124. The supporting member 128 is secured to a surface of the holding member 124, which is located in the second direction D2. The supporting member 128 holds the weight members 122 such that the weight members 122 are each movable in a radial direction. As illustrated in Fig. 2, a friction material 175 is provided between the supporting member 128 and the clutch center 40 (i.e., the first clutch center 41 in this embodiment). The friction material 175 is an example of another friction material.

As illustrated in Figs. 11 and 12, the first spherical members 131 are attached to the weight members 122. The first spherical members 131 are, for example, steel balls. Portions of the first spherical members 131 protrude from first openings of through holes defined in the weight members 122 and come into contact with the inclined grooves 126A of the pressing member 126. The second spherical members 132 are attached to the weight members 122. The second spherical members 132 are, for example, steel balls. Portions of the second spherical members 132 protrude from second openings of the through holes defined in the weight members 122 and come into contact with the inclined grooves 124B of the holding member 124.

As illustrated in Fig. 1, the urging members 135 are disposed radially outward of the weight members 122. The urging members 135 urge the weight members 122 radially inward. The urging members 135 are, for example, coil springs.

With no centrifugal force being applied to the weight members 122, the centrifugal clutch mechanism 120 described above holds each weight member 122 at the radially inner position such that the pressing force for the input-side rotary plates 20 and the output-side rotary plates 22 is released. Upon application of centrifugal force to the weight members 122, the centrifugal clutch mechanism 120 causes each weight member 122 to move from the radially inner position to the radially outer position. Accordingly, the pushing surface 126C of the pressing member 126 pushes the input-side rotary plates 20 and the output-side rotary plates 22 through the flange 68 of the second clutch center 51 such that the input-side rotary plates 20 and the output-side rotary plates 22 are pressed against each other, resulting in a state in which the rotational driving force of the input shaft is transmittable to the output shaft 15. In this case, the holding member 124 moves in the first direction D1 such that the pushing surface 124C of the holding member 124 pushes the auxiliary clutch plate 150.

As illustrated in Fig. 1, the auxiliary clutch plate 150 is provided in the clutch housing 30. The auxiliary clutch plate 150 is secured to the output shaft 15. The auxiliary clutch plate 150 is disposed in the first direction D1 relative to a portion of the centrifugal clutch mechanism 120. As illustrated in Fig. 2, the auxiliary clutch plate 150 is adjacent to the end face 42D1 (which faces in the first direction D1) of the output shaft holder 42 of the first clutch center 41. At least a portion of the auxiliary clutch plate 150 and at least a portion of the end face 42D1 of the output shaft holder 42 facing in the first direction D1 are in surface contact with each other. A washer and/or other component(s) may be provided between the auxiliary clutch plate 150 and the end face 42D1.

The auxiliary clutch plate 150 is configured to be able to transmit the rotational driving force of the input shaft to the output shaft 15 upon being pushed by the centrifugal clutch mechanism 120 (i.e., the pushing surface 124C of the holding member 124) when the input-side rotary plates 20 and the output-side rotary plates 22 are pressed against each other (i.e., when the weight members 122 of the centrifugal clutch mechanism 120 are each located at the radially outer position). The auxiliary clutch plate 150 is configured to cut off transmission of the rotational driving force of the input shaft to the output shaft 15 upon being released from being pushed by the centrifugal clutch mechanism 120 (i.e., the pushing surface 124C of the holding member 124) when the pressing force for the input-side rotary plates 20 and the output-side rotary plates 22 is released (i.e., when the weight members 122 are each located at the radially inner position). As illustrated in Fig. 13, the auxiliary clutch plate 150 includes a fitting portion 152 and the disk portion 154. The fitting portion 152 and the disk portion 154 are integral with each other.

As illustrated in Fig. 1, the fitting portion 152 is fitted to the output shaft 15. The fitting portion 152 is provided with an insertion hole 152H (see also Fig. 13) through which the output shaft 15 is inserted so as to be spline-fitted thereto. The insertion hole 152H is provided through the fitting portion 152. A length L1 of the fitting portion 152 in the direction D (i.e., the axial direction of the output shaft 15) is longer than a length L2 of the disk portion 154 in the direction D.

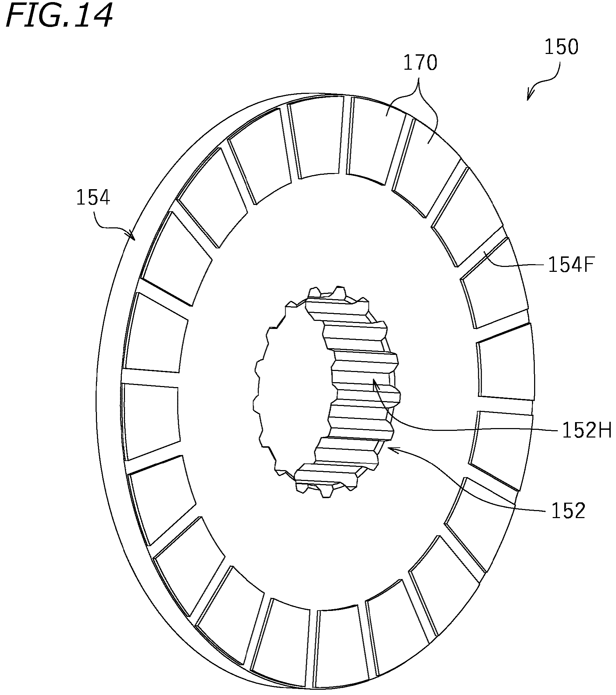

As illustrated in Fig. 1, the disk portion 154 is located radially outward of the fitting portion 152. The disk portion 154 includes an abutting surface 154F that is an end face facing in the second direction D2 and is to be pushed by the centrifugal clutch mechanism 120. As illustrated in Fig. 2, the abutting surface 154F is to be pushed by the pushing surface 124C of the holding member 124 of the centrifugal clutch mechanism 120. A friction material 170 (see also Fig. 14) is provided between the abutting surface 154F and the centrifugal clutch mechanism 120. Thus, the abutting surface 154F is indirectly pushed by the pushing surface 124C through the friction material 170. The disk portion 154 is located in the second direction D2 relative to a center 152C of the fitting portion 152 in the direction D.

As illustrated in Fig. 1, the stopper plate 100 is provided such that the stopper plate 100 is able to come into contact with the pressure plate 70. The stopper plate 100 is a component to prevent the pressure plate 70 from moving away from the clutch center 40 by a predetermined distance or more in the second direction D2. The stopper plate 100 is secured to the bosses 62 of the first clutch center 41 with the bolts 28. With the pressure springs 25 disposed in the spring housing portions 84 of the pressure plate 70, the bolts 28 are tightened into the bosses 62 and thus secured to the clutch center 40 through the stopper plate 100. The stopper plate 100 has a substantially triangular shape in a plan view.

A predetermined amount of clutch oil is supplied into the clutch apparatus 10. The cutch oil prevents or reduces heat absorption and/or wearing of the friction materials. The clutch apparatus 10 according to the present embodiment is a "wet multiplate friction clutch apparatus". The clutch oil flows into the clutch center 40 and the pressure plate 70 through the oil flow passage 15H of the output shaft 15 and is supplied to the input-side rotary plates 20 and the output-side rotary plates 22. As indicated by an arrow FL in Fig. 2, the clutch oil flowing through the oil flow passage 15H flows to the oil grooves 42P through the communication hole(s) 15B. In this embodiment, an end of the output shaft holder 42 located in the first direction D1 is provided with the stepped portion 48 (see also Fig. 4) extending across the entire circumference of the output shaft holder 42. This allows more reliable flow of the clutch oil to the oil grooves 42P through the stepped portion 48. Although the end face 42D1 of the output shaft holder 42, which faces in the first direction D1, and the auxiliary clutch plate 150 are in surface contact with each other, the end face 42D1 is provided with the oil grooves 42P, with the result that the clutch oil flowing out of the communication hole(s) 15B flows radially outward of the first clutch center 41 through the oil grooves 42P. Examples of components to which the clutch oil that has flowed radially outward of the first clutch center 41 is to be supplied include: the friction material 170 provided between the abutting surface 154F of the auxiliary clutch plate 150 and the centrifugal clutch mechanism 120; the friction material 175 provided between the supporting member 128 and the first clutch center 41; the weight members 122 of the centrifugal clutch mechanism 120; the input-side rotary plates 20; and the output-side rotary plates 22.

In the clutch apparatus 10 according to the present embodiment, the oil grooves 42P provided in the end face 42D1 of the output shaft holder 42 facing in the first direction D1 are, as described in above, in communication with the insertion hole 45 and extend in the radial direction of the output shaft 15 from the insertion hole 45 to the radially outer edge 42DO of the end face 42D1 facing in the first direction D1. Consequently, if a washer and/or other component(s), for example, are/is disposed on the end face 42D1 of the output shaft holder 42 facing in the first direction D1, clutch oil that has flowed out of the output shaft 15 through the oil grooves 42P would be suppliable to the outside (e.g., the input-side rotary plates 20 and the output-side rotary plates 22) from the radially outer edge 42DO of the end face 42D1 of the output shaft holder 42 facing in the first direction D1.

The clutch apparatus 10 according to the present embodiment includes the centrifugal clutch mechanism 120 including the weight members 122 each configured to be movable from the radially inner position to the radially outer position with centrifugal force produced by rotation of the clutch housing 30. The centrifugal clutch mechanism 120 presses the input-side rotary plates 20 and the output-side rotary plates 22 against each other such that the rotational driving force of the input shaft is transmittable to the output shaft 15 when the weight members 122 are each located at the outer position. The centrifugal clutch mechanism 120 releases the pressing force for the input-side rotary plates 20 and the output-side rotary plates 22 so as to be able to cut off transmission of the rotational driving force of the input shaft to the output shaft 15 when the weight members 122 are each located at the inner position. The centrifugal clutch mechanism 120 is located radially outward of the oil grooves 42P and located on the extension line 42PL of each oil groove 42P. In the above-described embodiment, the clutch oil that has flowed out of the output shaft 15 through the oil grooves 42P is suppliable to the centrifugal clutch mechanism 120.

The clutch apparatus 10 according to the present embodiment includes the auxiliary clutch plate 150 configured to be able to transmit the rotational driving force of the input shaft to the output shaft 15 upon being pushed by the centrifugal clutch mechanism 120 when the input-side rotary plates 20 and the output-side rotary plates 22 are pressed against each other, and configured to cut off transmission of the rotational driving force of the input shaft to the output shaft 15 upon being released from being pushed by the centrifugal clutch mechanism 120 when the pressing force for the input-side rotary plates 20 and the output-side rotary plates 22 is released. The auxiliary clutch plate 150 is secured to the output shaft 15 and adjacent to the end face 42D1 of the output shaft holder 42 facing in the first direction D1. At least a portion of the auxiliary clutch plate 150 and at least a portion of the end face 42D1 of the output shaft holder 42 facing in the first direction D1 are in surface contact with each other. In the above-described embodiment, the auxiliary clutch plate 150 is adjacent to the end face 42D1 of the output shaft holder 42 facing in the first direction D1, and at least a portion of the auxiliary clutch plate 150 and at least a portion of the end face 42D1 of the output shaft holder 42 facing in the first direction D1 are in surface contact with each other, but the clutch oil that has flowed out of the output shaft 15 through the oil grooves 42P is suppliable to the outside from the radially outer edge of the end face 42D1 of the output shaft holder 42 facing in the first direction D1.

In the clutch apparatus 10 according to the present embodiment, the auxiliary clutch plate 150 includes: the fitting portion 152 fitted to the output shaft 15; and the disk portion 154 located radially outward of the fitting portion 152, and the length L1 of the fitting portion 152 in the direction D1 is longer than the length L2 of the disk portion 154 in the direction D1. The above-described embodiment allows the auxiliary clutch plate 150 to be more reliably fitted to the output shaft 15 and enables compact placement of the auxiliary clutch plate 150.

In the clutch apparatus 10 according to the present embodiment, the centrifugal clutch mechanism 120 is configured to be able to push the disk portion 154, and the disk portion 154 is located in the second direction D2 relative to the center 152C of the fitting portion 152 in the axial direction. The above-described embodiment enables a reduction in size of the centrifugal clutch mechanism 120.

In the clutch apparatus 10 according to the present embodiment, the disk portion 154 includes the abutting surface 154F that is an end face facing in the second direction D2 and is to be pushed by the centrifugal clutch mechanism 120. In the above-described embodiment, the centrifugal clutch mechanism 120 is able to push an entirety of the auxiliary clutch plate 150 by pushing the abutting surface 154F.

The clutch apparatus 10 according to the present embodiment includes the friction material 170 provided between the abutting surface 154F and the centrifugal clutch mechanism 120. In the above-described embodiment, the rotational driving force is more reliably transmitted to the auxiliary clutch plate 150 through the centrifugal clutch mechanism 120 owing to the friction material 170. Because the clutch oil that has flowed out of the output shaft 15 is suppliable to the friction material 170, the above-described embodiment is able to prevent or reduce wearing of the friction material 170.

In the clutch apparatus 10 according to the present embodiment, the inner wall 45A of the output shaft holder 42 defining the insertion hole 45 is provided with the fitting teeth 47 extending in the axial direction of the output shaft 15 and fitted to the output shaft 15, at least a portion of the end face 42D1 of the output shaft holder 42 facing in the first direction D1 is located in the first direction D1 relative to the end face 47D1 of the fitting teeth 47 facing in the first direction D1, and the stepped portion 48 is provided between the end face 42D1 of the output shaft holder 42 facing in the first direction D1 and the end face 47D1 of the fitting teeth 47 facing in the first direction D1. In the above-described embodiment, the clutch oil that has flowed out of the output shaft 15 is temporarily retained by the stepped portion 48 and then flows into the oil grooves 42P, with the result that a larger amount of clutch oil flows to the outside from the oil grooves 42P.

In the clutch apparatus 10 according to the present embodiment, the stepped portion 48 is provided across the entire circumference of the output shaft holder 42. In the above-described embodiment, if the communication hole(s) 15B of the output shaft 15 and the oil grooves 42P are out of position (or phase) in the circumferential direction, the clutch oil flowing through the oil flow passage 15H of the output shaft 15 would be reliably suppliable to the oil grooves 42P.

In the clutch apparatus 10 according to the present embodiment, the centrifugal clutch mechanism 120 includes the supporting member 128 holding the weight members 122 such that the weight members 122 are each movable in the radial direction. The clutch apparatus 10 includes the friction material 175 provided between the supporting member 128 and the clutch center 40. The above-described embodiment enables supply of clutch oil to the friction material 175, making it possible to prevent seizure of the friction material 175.

In the clutch apparatus 10 according to the present embodiment, the auxiliary clutch plate 150 is secured to the output shaft 15 and adjacent to the end face 42D1 of the output shaft holder 42 facing in the first direction D1. In the above-described embodiment, the auxiliary clutch plate 150 is adjacent to the end face 42D1 of the output shaft holder 42 facing in the first direction D1, but the clutch oil that has flowed out of the output shaft 15 through the oil grooves 42P is suppliable to the outside from the radially outer edge 42DO of the end face 42D1 of the output shaft holder 42 facing in the first direction D1.

In the clutch apparatus 10 according to the present embodiment, the entirety of the end face 42D1 of the output shaft holder 42 facing in the first direction D1 is located in the first direction D1 relative to the end face 47D1 of the fitting teeth 47 facing in the first direction D1. In the above-described embodiment, the stepped portion 48 is provided across the entire circumference of the insertion hole 45, with the result that a larger amount of clutch oil is retainable by the stepped portion 48.

In the clutch apparatus 10 according to the present embodiment, when viewed in the axial direction of the output shaft 15, the diameter R1 of the portion of the insertion hole 45 defined by the inner edge 42I of the end face 42D1 of the output shaft holder 42 facing in the first direction D1 is larger than the diameter R2 of the portion of the insertion hole 45 defined by the radially inner edge 47I of the fitting teeth 47. The above-described embodiment allows the stepped portion 48 to have a sufficient length in the radial direction, with the result that a larger amount of clutch oil is retainable by the stepped portion 48.

In the clutch apparatus 10 according to the present embodiment, the output shaft 15 includes: the body 15A extending in the direction D and defining the oil flow passage 15H through which clutch oil flows; and communication hole(s) 15B provided in the body 15A, extending in the radial direction, and in communication with the oil flow passage 15H. In the above-described embodiment, the clutch oil flowing through the oil flow passage 15H of the body 15A flows into the oil grooves 42P through the communication hole(s) 15B.

In the clutch apparatus 10 according to the present embodiment, at least portion(s) of the communication hole(s) 15B is/are located between the end face 42D1 of the output shaft holder 42, which faces in the first direction D1, and the end face 47D1 of the fitting teeth 47, which faces in the first direction D1, in the direction D (i.e., the axial direction of the output shaft 15). In the above-described embodiment, the clutch oil flowing through the oil flow passage 15H of the body 15A is allowed to flow to the stepped portion 48 in a larger amount.

The preferred embodiment of the present invention has been described thus far. The foregoing embodiment, however, is only illustrative. The present invention may be embodied in various other forms.

In the foregoing embodiment, the clutch center 40 includes the first clutch center 41 and the second clutch center 51, and the first clutch center 41 and the second clutch center 51 are assembled to each other for use. Alternatively, the first clutch center 41 and the second clutch center 51 may be integral with each other.

In the foregoing embodiment, no clutch oil flows through the insertion hole 45 in the axial direction of the output shaft 15. Alternatively, clutch oil may flow through the insertion hole 45 in the axial direction of the output shaft 15.

In the foregoing embodiment, the clutch center 40 includes the center-side assist cam surfaces 60A and the center-side slipper cam surfaces 60S. Alternatively, the clutch center 40 may include neither the center-side assist cam surfaces 60A nor the center-side slipper cam surfaces 60S. In the foregoing embodiment, the pressure plate 70 includes the pressure-side assist cam surfaces 90A and the pressure-side slipper cam surfaces 90S. Alternatively, the pressure plate 70 may include neither the pressure-side assist cam surfaces 90A nor the pressure-side slipper cam surfaces 90S.

In the foregoing embodiment, the engine is used as the power source. The power source, however, is not limited to the engine. Examples of the power source may include an electric motor.

The straddled vehicle according to the present embodiment is a vehicle that a driver straddles to ride. The straddled vehicle is not limited to a motorcycle, such as a motor scooter. Examples of the straddled vehicle may include a motor tricycle, an all-terrain vehicle (ATV), and a snowmobile.

### Reference Signs List

- 10: clutch apparatus
- 15: output shaft
- 15A: body
- 15B: communication hole
- 15H: oil flow passage
- 20: input-side rotary plate
- 22: output-side rotary plate
- 30: clutch housing
- 40: clutch center
- 41: first clutch center
- 42: output shaft holder
- 42D1: end face facing in first direction
- 42P: oil groove
- 42PL: extension line
- 42DO: outer edge
- 42I: inner edge
- 45: insertion hole
- 45A: inner wall
- 47: fitting teeth
- 47D1: end face facing in first direction
- 47I: radially inner edge
- 48: stepped portion
- 70: pressure plate
- 120: centrifugal clutch mechanism
- 122: weight member
- 128: supporting member
- 150: auxiliary clutch plate
- 152: fitting portion
- 154: disk portion
- 154F: abutting surface
- 170: friction material
- 175: friction material (another friction material)

## Claims

1. A clutch apparatus to transmit a rotational driving force of an input shaft to an output shaft or cut off the rotational driving force, the clutch apparatus comprising:
a clutch center housed in a clutch housing holding input-side rotary plates to be rotationally driven in response to rotational driving of the input shaft, the clutch center holding output-side rotary plates disposed alternately with the input-side rotary plates, the clutch center being rotationally driven together with the output shaft; and
a pressure plate provided so as to be movable toward or away from the clutch center and rotatable relative to the clutch center, the pressure plate being able to push the input-side rotary plates and the output-side rotary plates, wherein
the clutch center includes an output shaft holder to which the output shaft is connected,
the output shaft holder includes an insertion hole through which the output shaft is inserted, and
assuming that a direction in which the pressure plate moves toward the clutch center is a first direction and a direction in which the pressure plate moves away from the clutch center is a second direction, an end face of the output shaft holder facing in the first direction is provided with an oil groove which is in communication with the insertion hole, which extends in a radial direction of the output shaft from the insertion hole to a radially outer edge of the end face facing in the first direction, and through which clutch oil that has flowed out of the output shaft flows.

2. The clutch apparatus according to claim 1, comprising a centrifugal clutch mechanism including a weight member configured to be movable from an inner position to an outer position in the radial direction with centrifugal force produced by rotation of the clutch housing, the centrifugal clutch mechanism pressing the input-side rotary plates and the output-side rotary plates against each other such that the rotational driving force of the input shaft is transmittable to the output shaft when the weight member is located at the outer position in the radial direction, the centrifugal clutch mechanism releasing a pressing force for the input-side rotary plates and the output-side rotary plates so as to be able to cut off transmission of the rotational driving force of the input shaft to the output shaft when the weight member is located at the inner position, wherein
the centrifugal clutch mechanism is located outward of the oil groove in the radial direction and located on an extension line of the oil groove.

3. The clutch apparatus according to claim 2, comprising an auxiliary clutch plate configured to be able to transmit the rotational driving force of the input shaft to the output shaft upon being pushed by the centrifugal clutch mechanism when the input-side rotary plates and the output-side rotary plates are pressed against each other, and configured to cut off transmission of the rotational driving force of the input shaft to the output shaft upon being released from being pushed by the centrifugal clutch mechanism when the pressing force for the input-side rotary plates and the output-side rotary plates is released, wherein
the auxiliary clutch plate is secured to the output shaft and adjacent to the end face of the output shaft holder facing in the first direction, and
at least a portion of the auxiliary clutch plate and at least a portion of the end face of the output shaft holder facing in the first direction are in surface contact with each other.

4. The clutch apparatus according to claim 3, wherein
the auxiliary clutch plate includes
a fitting portion fitted to the output shaft, and
a disk portion located outward of the fitting portion in the radial direction, and
a length of the fitting portion in an axial direction of the output shaft is longer than a length of the disk portion in the axial direction.

5. The clutch apparatus according to claim 4, wherein
the centrifugal clutch mechanism is configured to be able to push the disk portion, and
the disk portion is located in the second direction relative to a center of the fitting portion in the axial direction.

6. The clutch apparatus according to claim 5, wherein
the disk portion includes an abutting surface that is an end face facing in the second direction and is to be pushed by the centrifugal clutch mechanism.

7. The clutch apparatus according to claim 6, comprising a friction material provided between the abutting surface and the centrifugal clutch mechanism.

8. The clutch apparatus according to claim 2, wherein
an inner wall of the output shaft holder defining the insertion hole is provided with fitting teeth extending in an axial direction of the output shaft and fitted to the output shaft,
at least a portion of the end face of the output shaft holder facing in the first direction is located in the first direction relative to an end face of the fitting teeth facing in the first direction, and
a stepped portion is provided between the end face of the output shaft holder facing in the first direction and the end face of the fitting teeth facing in the first direction.

9. The clutch apparatus according to claim 8, wherein
the stepped portion is provided across an entire circumference of the output shaft holder.

10. The clutch apparatus according to claim 2, wherein
the centrifugal clutch mechanism includes a supporting member holding the weight member such that the weight member is movable in the radial direction, and
the clutch apparatus comprises another friction material provided between the supporting member and the clutch center.

11. The clutch apparatus according to claim 1, comprising an auxiliary clutch plate configured to be able to transmit the rotational driving force of the input shaft to the output shaft upon being pushed by a centrifugal clutch mechanism when the input-side rotary plates and the output-side rotary plates are pressed against each other, and configured to cut off transmission of the rotational driving force of the input shaft to the output shaft upon being released from being pushed by the centrifugal clutch mechanism when a pressing force for the input-side rotary plates and the output-side rotary plates is released, wherein
the auxiliary clutch plate is secured to the output shaft and adjacent to the end face of the output shaft holder facing in the first direction.

12. The clutch apparatus according to claim 1, wherein
an inner wall of the output shaft holder defining the insertion hole is provided with fitting teeth extending in an axial direction of the output shaft and fitted to the output shaft,
at least a portion of the end face of the output shaft holder facing in the first direction is located in the first direction relative to an end face of the fitting teeth facing in the first direction, and
a stepped portion is provided between the end face of the output shaft holder facing in the first direction and the end face of the fitting teeth facing in the first direction.

13. The clutch apparatus according to claim 12, wherein
an entirety of the end face of the output shaft holder facing in the first direction is located in the first direction relative to the end face of the fitting teeth facing in the first direction.

14. The clutch apparatus according to claim 12 or 13, wherein
when viewed in the axial direction of the output shaft, a diameter of a portion of the insertion hole defined by an inner edge of the end face of the output shaft holder facing in the first direction is larger than a diameter of a portion of the insertion hole defined by an inner edge of the fitting teeth in the radial direction.

15. The clutch apparatus according to claim 12 or 13, wherein
the stepped portion is provided across an entire circumference of the output shaft holder.

16. The clutch apparatus according to claim 12 or 13, comprising the output shaft, wherein
the output shaft includes
a body extending in the axial direction and defining an oil flow passage through which clutch oil flows, and
a communication hole provided in the body, extending in the radial direction, and in communication with the oil flow passage.

17. The clutch apparatus according to claim 16, wherein
in the axial direction of the output shaft, at least a portion of the communication hole is located between the end face of the output shaft holder facing in the first direction and the end face of the fitting teeth facing in the first direction.
